# EUROPEAN PATENT SPECIFICATION

(11) **EP 0 442 158 B1**
(45) Date of publication and mention of the grant of the patent: **20.04.1994**
(21) Application number: 90202578.2
(22) Date of filing: 28.09.1990
(51) Int. Cl.: H02B 1/044

(54) **Locking ring nut for push-button and switch actuators and the like**
Sicherungsringmutter für Druckknopfschalter und Schaltbetätiger oder dergleichen
Ecrou anneau de blocage pour bouton-poussoir et actionneurs de commutation ou similaires

(30) Priority: 13.02.1990 IT 2061090 U
(43) Date of publication of application: 21.08.1991
(73) Proprietor: CGE- COMPAGNIA GENERALE ELETTROMECCANICA S.p.A., I-20144 Milan (IT)
(72) Inventor: Falchi, Fiorino, I-10090 Sangano (Torino) (IT)
(74) Representative: Michelotti, Giuliano

(56) References cited:
- EP-A- 0 105 387
- FR-A- 1 478 524
- US-A- 4 453 059

## Description

The present invention relates to a locking ring nut for push-button actuators not expressely needing a specifical tool for screwing and unscrewing operations thereof on an actuator assembled to a panel board.

From EP 0 105 387 B1, filed on 16 September 1983 and granted on 25 March 1987, are well known control and/or signalling devices, to be installed at a panel board, availing of actuators fastened on said board by means of an internally threaded nut, screwed on a threaded stem behind said board in such a way that said actuator, once fastened, cannot be unscrewed unless by operating on said locking ring nut located behind the board, avoiding any possible accidental or fraudulent unscrewing of said actuator. The internally threaded nut used in the invention covered by the abovementioned patent consists of a tubolar internally threaded member front provided with a seat housing a sealing gasket and aft provided with a slot circumferencial row designated to engage theeth projecting from a proper and specifical socket wrench used just to screw and unscrew said nut with respect to the stem of said actuator.

The drawback of the above specified nut consists exactly in the need of a proper socket wrench for rotating it, because in case of an accidental lack of said wrench, an assembler cannot provide to properly assemble an actuator specified in said patent.

It is a purpose of the present invention to provide a ring nut allowing a proper assembly of an actuator fastened to a panel board even in lack of a proper and specifical tightening wrench.

The above mentioned purpose is obtained through a ring nut for actuator in the form of a cylindrical hollow sleeve internally threaded provided with thick enough walls for housing at least a slot, acting as a seat for engaging a rotatable tool, as a screwdriver, pierced in a basis of said cylindrical sleeve on the opposed side with respect to that engaging said ring nut against a panel board to which must be fastened said actuator.

Preferably, said slots acting as engagement seats of a screwdriver are more than one in number to allow an engagement of said screwdriver from more sides around a cylindrical stem of said actuator.

More preferably, said engagement seats are four in number equally arranged on a substantially intermediate cicumference in the thickness of the lateral wall of said ring nut.

Further, said ring nut can provide on the basis itself in which are made said slots, at least a recess on the external circumference of the basis itself, for housing in engagement at least a tooth protruding from a specifical socket wrench which can be used for screwing and unscrewing said ring nut.

Preferably, said circumferential recesses are more than one in number, are arranged on said circumference and house in engagemnet corresponding teeth protruding from a specifical socket wrench.

More preferably, said circumferential recesses are four in number arranged in equal spaces on the external circumference of the basis of said ring nut.

The features and the advantages of the present invention are depicted more in detail by a description of an embodiment thereof, given in a not limiting way, provided with the enclosed drawing, wherein:

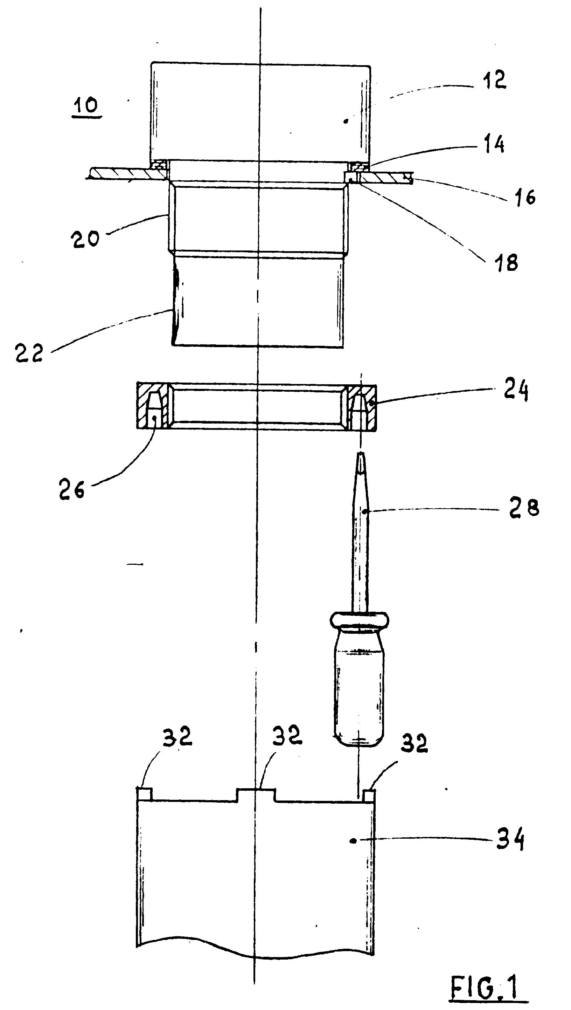

figure 1 depictes a fastening sequence of an actuator using a ring nut according to the present invention;

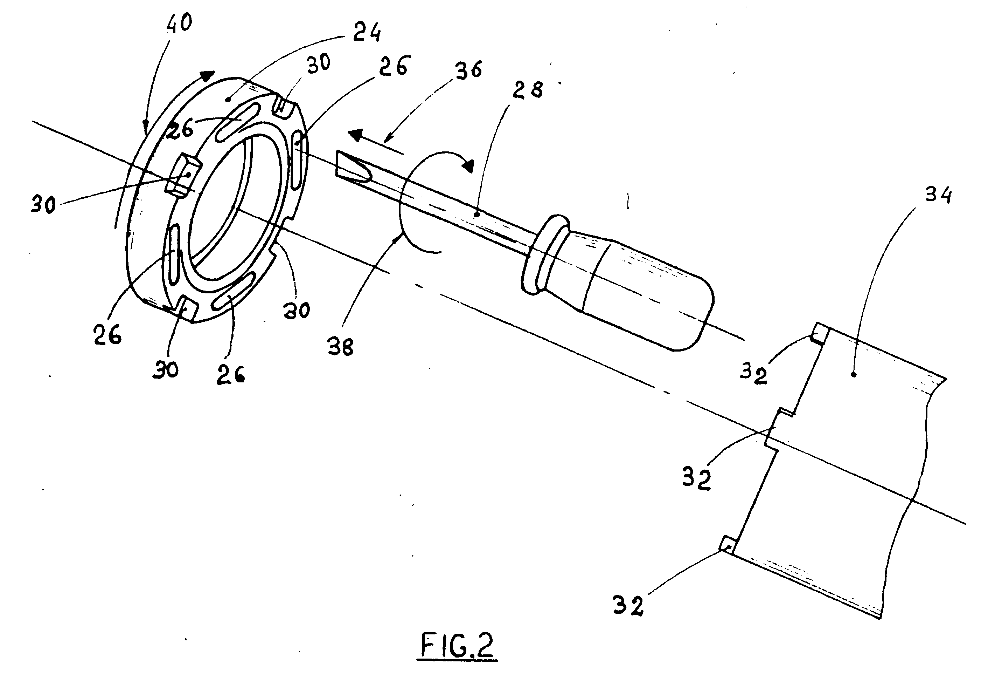

figure 2 depictes in perspective view a fastening manner through a screwdriver of the nut according to the present invention.

Presently referring to the figures, it is to see that an actuator 10 , incorporating the present invention, comprises an enlarged sleeve 12, provided with a sealing gasket 14, assembled on a panel board 16 according to a preset angular direction determined by a tooth 18 within a corresponding seat made in the edge of a circular hole housing said actuator.

The actuator 10 comprises connected to the enlarged sleeve 12 a first threaded tubular portion 20 continued in a second tubular not threaded more restricted portion usefull as a centering guide for a fastening ring nut 24 formed by a tubular member, preferably of plastics obtainable by moulding, internally threaded for engaging the first tubular threaded region 20, said nut being provided with slots or reentring seats, having a shape for housing the blade of a screwdriver 28, in the externally faced basis thereof.

Further, in order to provide a traditional fastening, which can be more symmetrical and balanced, said ring nut 24 has also peripheral seats or recesses 30 housing teeth 32 of a traditional socket wrench 34 alredy used in the prior art depicted in the above mentioned European Patent.

The operation of the invention is the following one: if it is desired to fasten the actuator 10 to the panel board 16, the nut 24 must be tightened against the internal surface of said panel board 16, beginning to hand screw said ring nut 24 on the threaded portion 20. When the ring nut 24 abuts against the internal surface of the panel board 16, to completely tighten the same is taken a screwdriver 28, advancing it in the direction of the arrow 36 to insert its blade into one of the slots 26, and then said screwdriver 28 is rotated according to the arrow 38, so causing the tightening of said ring nut against the internal surface of the panel board 16 and, thus, the fastening of the actuator 10 to the panel board. Of course, the presence of the peripheral seats or recesses 30 allows also the traditional use of the socket wrench 34 provided with teeth 32, actually allowing to tighten the ring nut with a more uniform strain distibution of less strength thereon.

However, the presence of the slots 26 allows to use the ring nut also if lacks the socket wrench.

## Claims

1. Fastening ring nut for push-button actuators, or the like, having shape of a cylindrical hollow internally threaded sleeve (24) characterized by thick enough walls for housing at least a slot (26), operating as a seat to engage a rotatable tool as a screwdriver (28), pierced in a basis of said cylindrical sleeve (24) opposed to that engaging said ring nut against a panel board (16), to which said actuator must be fastened.

2. Fastening ring nut for actuators, as in claim 1, characterized in that said slots (26) operating as engagement seats of a screwdriver (28) are more than one in number to allow an engagement of said screwdriver (28) from more than one side about a cylindrical stem of said actuator.

3. Fastening ring nut for actuators, as in claim 2, characterized in that said engagement slots (26) are four in number equally located on a substantially intermediate circumference in the thickness of the lateral wall of said ring nut.

4. Fastening ring nut for actuators, as in claims 1 to 3, characterized in that said ring nut can provide on the same basis, on which said slots (26) are made, at least a recess (30) present on the external circumference of the basis itself, for engageably housing at least a tooth (32) to be used for tightening and loosing said ring nut.

5. Fastening ring nut for actuators, as in claim 4, characterized in that said circumferential recesses (30) are more than one in number, are arranged on said circumference and provide to house in engagement corresponding teeth (32) protruding from a proper socket wrench (34).

6. Fastening ring nut for actuators, as in claim 4, characterized in that said circumferential recesses (30) are four in number arranged at regular spaces on the external circumference of the basis of said ring nut.

## Patentansprüche

1. Befestigungsringmutter für Druckknopf-Betätigungsglieder oder ähnliches, mit der Form einer zylindrischen, hohlen, mit Innengewinde versehenen Hülse (24),
gekennzeichnet durch ausreichend dicke Wände zur Aufnahme wenigstens eines Schlitzes (26), der als ein Sitz zum Eingriff mit einem Werkzeug, wie einem Schraubendreher (28), arbeitet und der in eine Basis der zylindrischen Hülse (24) gegenüber derjenigen Seite eindringt, mit der die Ringmutter gegen eine Steuerplatte (16) gedrückt ist, an der das Betätigungglied zu befestigen ist.

2. Befestigungringmutter nach Anspruch 1, dadurch gekennzeichnet, daß die Schlitze (26), die als Eingriffssitze von einem Schraubendreher (28) arbeiten, zahlenmäßig mehr als einer sind und einen Eingriff des Schraubendrehers (28) von mehr als einer Seite um einen zylindrischen Fuß des Betätigungsgliedes herum erlauben.

3. Befestigungsringmutter nach Anspruch 2, dadurch gekennzeichnet, daß zahlenmäßig vier Eingriffsschlitze (26) vorgesehen sind, die in gleichen Abständen im wesentlichen auf einem Zwischenumfang in der Dicke der Seitenwand der Ringmutter angeordnet sind.

4. Befestigungsringmutter nach einem der Ansprüche 1 bis 3, dadurch gekennzeichnet, daß die Ringmutter auf der gleichen Basis, auf der die Schlitze (26) ausgebildet sind, wenigstens eine Ausnehmung (30) aufweisen kann, die auf dem äußeren Umfang der Basis selbst für einen Eingriff mit wenigstens einem Zahn (32) vorhanden ist, der zum Festziehen und Lösen der Ringmutter verwendbar ist.

5. Befestigungsringmutter nach Anspruch 4, dadurch gekennzeichnet, daß zahlenmäßig mehr als eine Umfangsausnehmungen (30) vorgesehen ist, die auf dem Umfang ausgebildet sind und entsprechende Zähne (32) aufnehmen können, die von einem richtigen Steckschlüssel vorstehen.

6. Befestigungsringmutter nach Anspruch 4, dadurch gekennzeichnet, daß zahlenmäßig vier Umfangsausnehmungen (30) vorgesehen sind, die in regelmäßigen Abständen auf dem äußeren Umfang der Basis der Ringmutter angeordnet sind.

## Revendications

1. Ecrou annulaire de fixation pour actionneurs à bouton-poussoir, ou éléments analogues, ayant la forme d'un manchon cylindrique creux (24), fileté intérieurement, caractérisé par des parois suffisamment épaisses pour loger au moins une encoche (26) servant d'appui pour mettre en prise un outil rotatif comme un tourne-vis (28), percée dans une base dudit manchon cylindrique (24) à l'opposé de celle appuyant ledit écrou annulaire contre un panneau de distribution (16) auquel doit être fixé ledit actionneur.

2. Ecrou annulaire de fixation pour actionneurs selon la revendication 1, caractérisé en ce que lesdites encoches (26) servant d'appuis de mise en prise pour un tourne-vis (28) sont en nombre supérieur à un afin de permettre une mise en prise du tourne-vis (28) depuis plus d'un côté autour d'une tige cylindrique dudit actionneur.

3. Ecrou annulaire de fixation pour actionneurs selon la revendication 2, caractérisé en ce que lesdites encoches de mise en prise (26) sont au nombre de quatre placées de façon égale sur une circonférence sensiblement médiane dans l'épaisseur de la paroi latérale dudit écrou annulaire.

4. Ecrou annulaire de fixation pour actionneurs selon les revendications 1 à 3, caractérisé en ce que ledit écrou annulaire peut présenter, sur la même base que celle où sont réalisées lesdites encoches (26), au moins un évidement (30) placé sur la circonférence extérieure de la base elle-même pour loger en la retenant au moins une dent (32) qui sera utilisée pour serrer et desserrer ledit écrou annulaire.

5. Ecrou annulaire de fixation pour actionneurs selon la revendication 4, caractérisé en ce que lesdits évidements (30) de la circonférence sont en nombre supérieur à un, sont placés sur ladite circonférence et permettent de loger en les retenant des dents correspondantes (32) qui font saillie d'une clé à douille appropriée (34).

6. Ecrou annulaire de fixation pour actionneurs selon la revendication 4, caractérisé en ce que lesdits lesdits évidements (30) de la circonférence sont au nombre de quatre, placés à intervalles réguliers sur la circonférence extérieure de la base dudit écrou annulaire.
